# EUROPÄISCHE PATENTSCHRIFT

(11) **EP 0 504 585 B1**
(45) Veröffentlichungstag und Bekanntmachung des Hinweises auf die Patenterteilung: **21.09.1994**
(21) Anmeldenummer: 92102360.2
(22) Anmeldetag: 13.02.1992
(51) Int. Cl.: F02D 41/40, F02D 41/26

(54) **System zur Steuerung einer Brennkraftmaschine**
System for controlling an internal combustion engine
Système pour commander un moteur à combustion interne

(30) Priorität: 16.03.1991 DE 4108639
(43) Veröffentlichungstag der Anmeldung: 23.09.1992
(73) Patentinhaber: ROBERT BOSCH GMBH, 70442 Stuttgart (DE)
(72) Erfinder: Fischer, Werner, Dipl.-Ing., W-7258 Heimsheim (DE); Locher, Johannes, W-7000 Stuttgart 50 (DE); Schönfelder, Dietbert, Dipl.-Ing., W-7000 Stuttgart 1 (DE); Berger, Joachim, Dipl.-Ing., W-7065 Winterbach (DE); Lutz, Peter, Dipl.-Ing., W-7102 Weinsberg (DE); Wessel, Wolf, W-7141 Oberriexingen (DE); Tauscher, Joachim, Dipl.-Ing. (BA), W-7000 Stuttgart 1 (DE)

(56) Entgegenhaltungen:
- DE-A- 3 521 075
- US-A- 4 730 256

## Beschreibung

### Stand der Technik

Die Erfindung betrifft ein System zur Steuerung einer Brennkraftmaschine.

Ein System zur Steuerung einer Brennkraftmaschine ist aus der DE-OS 35 21 075 bekannt. Bei der dort beschriebenen System zur Steuerung einer Brennkraftmaschine kann Über ein Magnetventil der Förderbeginn und das Förderende der Kraftstoffeinspritzung festgelegt werden. Bei diesem System ist das Steuergerät zweigeteilt. Zwei Steuereinheiten teilen sich die Berechnung der Steuersignale. Eine externe Steuereinheit berechnet ausgehend von Fahrpedalstellung und dem Ladedruck Grunddaten, diese werden über ein Übertragungsmittel an ein zweites Steuergerät übermittelt. Dieses zweite Steuergerät berechnet ausgehend von den Grunddaten und weiteren Sensorsignalen die Ansteuersignale für das Magnetventil.

Aus der nicht vorveröffentlichten DE-OS 40 04 110 ist ferner ein Verfahren und eine Einrichtung zur Steuerung einer Diesel-Brennkraftmaschine bekannt. Hierbei wird über wenigstens ein Magnetventil der Förderbeginn und das Förderende der Kraftstoffpumpe festgelegt.

Zwei Steuergeräte berechnen abhängig von auf der Nocken- und/oder Kurbelwelle angebrachten Markierungen, ein Steuersignal für das oder die Magnetventile.

Bei den bekannten Einrichtungen ist die Mengen- und Spritzbeginnsteuerung ungenau. Ferner treten Probleme auf, wenn eines der Steuergeräte oder die Übertragung der Daten zwischen den Steuergeräten ausfällt. In diesem Fall können die Ansteuersignale nicht mehr erzeugt werden. Dies führt dazu, daß die Brennkraftmaschine und damit auch das Fahrzeug stehen bleibt.

Ferner ist aus der US-A-4 730 256 bekannt, Rechner untereinander mit mehreren Datenleitungen zu verbinden, die je nach Belegung erste und zweite Signale transportieren, um bei Ausfall eines Bussystems nicht alle Kontrolle zu verlieren.

Bei den bekannten Einrichtungen ist die Mengen- und Spritzbeginn-Steuerung ungenau. Ferner treten Probleme auf, wenn eines der Steuergeräte oder die Übertragung der Daten zwischen den Steuergeräten ausfällt. In diesem Fall können die Ansteuersignale nicht mehr erzeugt werden. Dies führt dazu, daß die Brennkraftmaschine und damit auch das Fahrzeug stehen bleibt.

### Aufgabe der Erfindung

Der Erfindung liegt die Aufgabe zugrunde, bei einem System zur Steuerung einer Brennkraftmaschine der eingangs genannten Art die Genauigkeit der Kraftstoffzumessung zu verbessern und gleichzeitig einen komfortablen Notlaufbetrieb zu ermöglichen. Diese Aufgabe wird durch die im Anspruch 1 gekennzeichneten Merkmale gelöst.

### Vorteile der Erfindung

Mittels des erfindungsgemäßen Systems ist eine wesentlich genauere Kraftstoffzumessung möglich. Die Einspritzmenge und der Einspritzbeginn können abhängig vom Motorzustand optimal gesteuert werden. Auch ist bei Ausfall von verschiedenen Komponenten weiter ein sicherer Betrieb der Brennkraftmaschine möglich.

Vorteilhafte und zweckmäßige Ausgestaltungen der Erfindung sind in den Unteransprüchen gekennzeichnet.

### Zeichnung

Die Erfindung wird nachstehend anhand der in der Zeichnung dargestellten Ausführungsformen erläutert. Es zeigen die Figur 1 ein Blockdiagramm der erfindungsgemäßen Einrichtung, Figur 2 ein detailiertes Diagramm eines Teils der erfindungsgemäßen Einrichtung, die Figur 3 ein Zeitdiagramm von verschiedenen Ansteuersignalen und Figur 4 die Abfolge verschiedener Signale zur Verdeutlichung der Berechnung der Ansteuersignale.

### Beschreibung des Ausführungsbeispiels

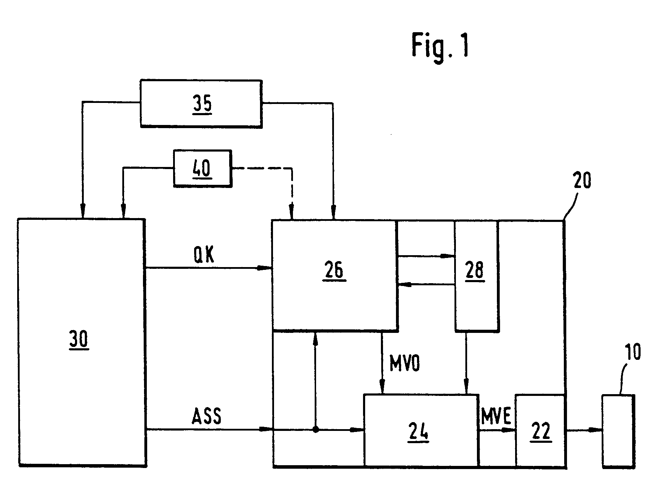

Figur 1 zeigt ein Blockdiagramm der erfindungsgemäßen Steuereinrichtung für eine magnetventilgesteuerte Kraftstoffpumpe, insbesondere für einen Dieselmotor. Dabei ist vorgesehen, daß mittels eines Magnetventils 10 die Kraftstoffzumessung einer Verteilerpumpe gesteuert wird. Dabei kann das Magnetvenil so angeordnet sein, daß bei geschlossenem Magnetventil Kraftstoff gefordert wird. Zum anderen ist aber auch denkbar, daß das Magnetventil so geschaltet ist, daß bei geöffnetem Magnetventil Kraftstoff gefördert wird. Je nach Anordnung des Magnetventils muß die Polarität des Ansteuersignals gewählt werden.

Die Erfindung ist aber nicht nur auf solche Systeme beschränkt, bei denen mittels eines Magnetventils die Kraftstoffzufuhr durch die einzelnen Zylinder gesteuert wird. Das erfindungsgemäße System kann auch bei solchen Kraftstoffzumeßsystemen verwendet werden, bei denen jedem Zylinder der Brennkraftmaschine eine separate Pumpeneinheit und jeder Pumpeneinheit wiederum ein Magnetventil zugeordnet ist, das die Kraftstoffzumessung steuert. Solche Zumeßsysteme werden üblicherweise als Pumpe-Düse-Systeme bezeichnet.

Das Magnetventil 10 wird von einer Zumeßsteuerung 20, die auch als zweites Steuergerät oder zweite Steuereinheit bezeichnet wird, mit einem Ansteuersignal MVE beaufschlagt. Die Zumeßsteuerung enthält verschiedene Blöcke, die software-mäßig oder auch hardware-mäßig realisiert sein können. Die Ausgangssignale zur Ansteuerung des Magnetventils 10 werden von einer Endstufensteuerung 22 gebildet. Diese steht wiederum mit einer Sicherheitslogik 24 in Verbindung. Die Sicherheitslogik 24 erhält Signale von einem Zumeßrechner 26, der üblicherweise als Mikroprozessor realisiert ist.

Ferner erhält die Sicherheitslogik 24 ein Ansteuerbeginnsignal ASS, im weiteren auch als zweites Signal bezeichnet. Dieses Ansteuerbeginnsignal ASS wird auch dem Zumeßrechner 26 zugeführt. Die Zumeßrechner 26 steht mit einer Überwachungseinrichtung 28 in Verbindung. Solche Überwachungseinrichtungen werden üblicherweise auch als Watchdog bezeichnet. Die Überwachungseinrichtung 28 gibt ein Signal an die Sicherheitslogik 24 und den Zumeßrechner ab.

Ferner gelangen Signale QK von einem ersten Steuergerät, auch als Motorrechner oder zweite Steuereinheit bezeichnet, zu dem Zumeßrechner 26. Der Motorrechner 30 und der Zumeßrechner 26 stehen mit verschiedenen Sensoren 35 in Verbindung. Diese Sensoren sind zum Beispiel als Impulsgeber ausgebildet. Hierzu sind auf der Kurbelwelle und/oder auf der Nockenwelle Markierungen in Form von Impulsrädern angeordnet. Mittels geeigneter Auswerteschaltungen erzeugen diese Markierungen auf der Nocken und/oder Kurbelwellen Impuls folgen. Ferner gelangt das Ausgangssignal eines Pedalwertgebers 40 zum Motorrechner 30. Mit einer gestrichelten Linie ist angedeutet, daß dieses Signal auch direkt zum Zumeßrechner 26 geleitet werden kann.

Die Funktionweise dieser Einrichtung ist nun wie folgt. Der Motorrechner 30 berechnet abhängig von der Stellung des Pedalwertgebers 40, den von den Sensoren 35 abgegebenen Impulsfolgen und eventuell von weiteren Betriebsparametern ein Signal QK, das der einzuspritzenden Kraftstoffmenge entspricht. Dieses Signal wird als Mengenwunschsignal QK bezeichnet. Des weiteren berechnet der Motorrechner 30 ausgehend von der Stellung der Kurbelwelle das zweite Signal ASS, das den Förderbeginn kennzeichnet. Das Mengenwunschsignal QK und eventuell weitere Signale werden über ein erstes Übertragungsmittel an die Zumeßsteuerung 20 übertragen. Dieses Übertragungsmittel wird üblicherweise als CAN-Bus bezeichnet. Das Ansteuerbeginnsignal ASS gelangt über ein separates Übertragungsmittel vom Motorrechner 30 zur Zumeßsteuerung 20. Dieses seperate Übertragungsmittel ist im einfachsten Fall eine Leitung. Diese Vorgehensweise hat den Vorteil, daß auch bei Ausfall des CAN Buses über das zweite Übertragungsmittel das Ansteuerbeginnsignal ASS ein Notbetrieb möglich ist.

Ausgehend von dem Mengenwunschsignal QK und den Signalen der Sensoren 35 erzeugt die Zumeßrechner 26 ein Ansteuerendesignal MVO. Die genaue Berechnung des Ansteuerendes erfolgt unter anderem abhängig von der Stellung der Nockenwelle. Hierzu werden die Impulse des auf der Nockenwelle angeordneten Impulsrades ausgewertet. Dieses Ansteuerendesignal MV0 legt das Ende der Einspritzung und damit auch die Einspritzmenge fest. In die Berechnung des Ansteuerendesignals MV0 geht neben verschieden Betriebsparametern auch das Ansteuerbeginnsignal ASS ein.

Die überwachungseinrichtung 28 tauscht mit der Zumeßrechner 26 laufend Signale aus. Dadurch wird es ermöglicht, daß die Überwachungseinrichtung 28 einen Defekt des Zumeßrechners 26 erkennt. Bei einem erkannten Defekt des Zumeßrechners 26 gibt die Überwachungseinrichtung 28 ein entsprechendes Signal an die Sicherheitslogik 24 ab.

Die Sicherheitslogik verknüpft mittels verschiedener Logikelemente, das Ansteuerbeginnsignal ASS, das Ansteuerendesignal MV0, auch als drittes Signal bezeichnet und das Signal der Überwachungseinheit 28. Das Resultat dieser Verknüpfung bildet dann das Ansteuersignal MVE, das der Endstufenansteuerung 22 zugeführt wird. Bei Vorliegen des Ansteuersignals MVE wird das Magnetventil 10 mit einem solchen Signal beaufschlagt, daß die Förderung von Kraftstoff ermöglicht wird.

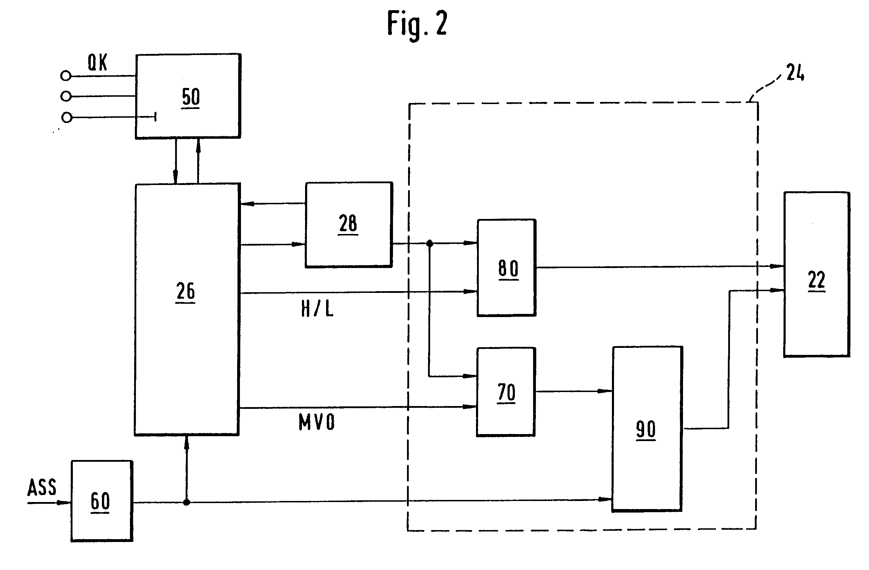

In Figur 2 ist der Zumeßsteuerung 20 detailierter dargestellt. Entsprechende Elemente sind mit den gleichen Bezugsziffern bezeichnet. Der Zumeßrechner 26 ist mit einem CAN-Bus 50 verbunden. Die Busleitung besteht bei diesem Ausführungsbeispiel aus drei Leitungen. Einer Masseleitung und zwei Signalleitungen. Über diese Leitungen wird unter anderem das Kraftstoffmengenwunschsignal QK übertragen. Die Erfindung ist dabei nicht nur auf solche Übertragungsmittel beschränkt. Das im folgenden beschriebene System läßt sich auch mit anderen Übertragungsmittel realisieren.

Das Ansteuerbeginnsignal ASS gelangt über eine Eingangsschutzschaltung 60 zum Zumeßrechner und zur Sicherheitslogik 24. Die Sicherheitslogik besteht im wesentlichen aus einem ersten Logikelement 70 auch als erstes ODER-Gatter bezeichnet, einem zweiten Logikelement 80, auch als zweites ODER-Gatter bezeichnet und einem dritten Logikelement 90, auch als UND-Gatter bezeichnet.

Das erste ODER-Gatter 70 verknüpft das Ausgangssignal der Überwachungseinrichtung 28 mit dem Ansteuerendesignal MV0 des Zumeßrechners 26. Das zweite ODER-Gatter 80 verknüpft das Ausgangssignal der Überwachungseinrichtung mit einem weiteren Ausgangssignal H/L des Zumeßrechners 26. Das UND-Gatter 90 verknüpft das Ausgangssignal des ersten ODER-Gatters 70 mit dem Ansteuerbeginnsignal ASS. Das Ausgangssignal des UND-Gatters 90 und des zweiten ODER-Gatters 80 legen gemeinsam die Ansteuerung des Magnetventils fest.

Die Funktionsweise zur Einrichtung wird im folgenden erläutert. Mit Hilfe des weiteren Ausgangssignals H/L des Zumeßrechners wird erreicht, daß zu Beginn der Ansteuerphase das Magnetventil mit einer höheren Eingangsleistung beaufschlagt wird. Dadurch wird erreicht, daß das Magentventil 10 schneller von einem Zustand in den anderen übergeht. Liegt also das Signal H/L vor, so wird das Magnetventil mit einem Strom (Spannung) beaufschlagt, der höher ist als der Haltestrom (Spannung). Liegt das Signal H/L dagegen nicht vor, so wird das Magnetventil nur mit einem kleineren Strom (Spannung) beaufschlagt. Erkennt die Überwachungseinrichtung 28 einen Ausfall oder einen Defekt des Zumeßrechners 26, so gibt die Überwachungseinrichtung 28 ein entsprechendes Signal ab. Am Ausgang des zweiten ODER-Gatters 80 liegt also ständig ein Signal an. Bei Ausfall der Zumeßrechner 26 wird also das Magnetventil ständig mit höherer Leistung beaufschlagt.

Das erste ODER-Gatter 70 verknüpft das Ausgangssignal der Überwachungseinrichtung 28 mit dem Ansteuerendesignal MV0 des Zumeßrechners 26. Bei Ausfall des Zumeßrechners liegt also am Ausgang des ersten ODER-Gatters 70 ständig ein Signal an. Bei korrekter Funktion des Zumeßrechners dagegen liegt am Ausgang des zweiten ODER-Gatters 70 nur dann ein Signal an, wenn das Ansteuerendesignal MV0 von dem Zumeßrechner 26 ausgegeben wird. Wenn also die Überwachungseinrichtung 28 ein Signal abgibt, liegt am einen Eingang des UND-Gatters 90 ständig ein Signal an.

Das Ansteuerbeginnsignal ASS, das am zweiten Eingang des UND-Gatters 90 liegt, hat somit ständigen Durchgriff. Das Ausgangssignal des UND-Gatters hängt also lediglich von seinem zweiten Eingangssignal dem Ansteuerbeginnsignal ASS ab.

Fällt durch einen Defekt das Ansteuerbeginnsignal ASS aus, so wird dieses von der Eingangsschutzschaltung 60 erkannt. Sie erzeugt dann ein ständig anliegendes Ersatzsignal. In diesem Fall liegt an dem zweiten Eingang des UND-Gatters 90 ständig ein Signal an. Dies bewirkt wiederum, daß das Ansteuerendesignal MV0, bzw. das Ausgangssignal des ersten ODER-Gatters 70 ständigen Durchgriff besitzt. Das Ausgangssignal des UND-Gatters 90 entspricht also dem Ansteuerendesignal MV0.

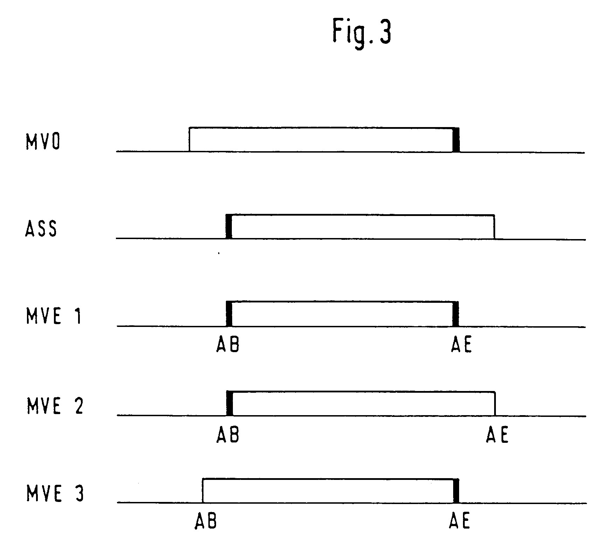

In Figur 3 sind das Ansteuerendesignal MV0, das Ansteuerbeginnsignal ASS sowie Ansteuersignale MVE1, MVE2 und MVE3 für verschiedene Fehler über der Zeit aufgetragen. Das Ansteuerendesignal MV0 wird von dem Zumeßrechner 26 berechnet. Dises Signal tritt in der Regel so früh auf, daß es vor dem frühest möglichen Einspritzbeginn liegt. Das Signal entfällt genau dann, wenn die Einspritzung beendet sein soll. Das Ende des Signal legt also das Einspritzende AE fest. Dies ist dadurch gekennzeichnet, daß das Ende des Signal dicker markiert ist. Das Ansteuerbeginnsignal ASS beginnt zum vorberechneten optimalen Ansteuerbeginn AB. Dies ist dadurch gekennzeichnet, daß der Beginn des Signal dicker markiert ist. Es entfällt erst nach der längsten zulässigen Einspritzung.

Mit MVE1 ist das Ansteuersignal bezeichnet, das im Normalbetrieb die Ansteuerung des Magnetventils veranlaßt. Der Ansteuerbeginn AB wird durch das Ansteuerbeginnsignal ASS festgelegt und das Ansteuerende wird durch das Ansteuerendesignal MV0 festgelegt. Dies wird durch die schon beschriebene Vorgehensweise erreicht. Das Ansteuersignal MVE wird durch eine logische Verknüpfung des Ansteuerendesignals MV0 und des Ansteuerbeginnsignal ASS erreicht. Nur wenn beide Signale vorliegen, ergibt sich das Ansteuersignal MVE1.

Es können nun verschiedene Fehler in der Zumeßsteuerung, im Motorrechner oder in den Übertragungsmittel auftreten. So ist es zum Beispiel möglich, daß in dem Zumeßrechner 26 ein Fehler auftritt. Ein solcher Fehler wird durch die Überwachungseinrichtung 28 erkannt. Wie schon beschrieben, gibt die Überwachungseinrichtung ein Signal an das erste ODER-Gatter ab, auf das hin am Eingang des UND-Gatters ständig ein Signal anliegt. Somit hat das Ansteuerbeginnsignal ASS im Motorsteuergerät ständigen Durchgriff auf die Magnetventilansteuerung. Das Ansteuerbeginnsignal ASS bestimmt also sowohl den Ansteuerbeginn AB als auch das Ansteuerende AE.

Das Ansteuersignal MVE2, das diesem Fall entspricht ist also identisch mit dem Ansteuerbeginnsignal ASS. Dabei muß sichergestellt werden, daß die Dauer des Ansteuerbeginnsignals ASS so kurz wird, daß keine zu hohen Mengen eingespritzt werden. Dies kann zum Beispiel dadurch erreicht werden, daß der Motorrechner, der dieses Signal erzeugt, mit einem entsprechenden Signal informiert wird. Der Motorrechner verkürzt daraufhin die Dauer des Ansteuerbeginnsignals ASS.

Ferner kann der Fehler auftreten, daß an der Zumeßsteuerung kein Ansteuerbeginnsignal ASS anliegt. Dies kann verschiedene Ursachen haben. Zum einen kann die Leitung unterbrochen sein oder der Motorrechner kann defekt sein oder fehlerhaft arbeiten. Ein Ausfall des Ansteuerbeginnsignals ASS wird durch die Eingangsschutzschaltung 60 erkannt. Diese gibt daraufhin ständig ein Signal an den einen Eingang des UND-Gatter 90 ab. Dies hat wiederum zur Folge, daß das Ansteuerendesignal MV0 die Ansteuerung des Magnetventils übernimmt. In diesem Fall entspricht das Ansteuersignal MVE3 dem Ansteuerendesignsl MV0. Dabei ist vorgesehen, daß der Motorrechner über den CAN Bus ein zusätzliches Signal an den Zumeßrechner 26 abgibt. Dieses zusätzliche Signal, ist ein Maß für den Förderbeginn. Die Zumeßsteuerung 26 berechnet dann daraus und in Abhängigkeit von verschiedenen Signalen den Ansteuerbeginn. Das Ansteuerendesignal beginnt dann mit dem berechneten Förderbeginn.

Auch bei einer Störung bzw. einer Unterbrechnung des CAN Buses oder bei Ausfall des Motorrechners wird die Ansteuerung des Magnetventils durch das Ansteuerendesignal MV0 festgelegt. Bei Ausfall des Motorrechners bzw. des CAN Busses ist es erforderlich, daß ein Fahrpedalersatzsignal zur Zumeßsteuerung gelangt. Ausgehend von diesem Fahrpedalersatzsignal errechnet der Zumeßrechner 26 ein entsprechendes Ansteuerendesignal MV0.

Diese Einrichtung hat den Vorteil, daß zur Ermöglichung eines Notlaufbetriebs keinerlei zusätzliche Eingänge und Leitungen benötigt werden. Die Ansteuerung des Magnetventils kann wahlweise durch die Zumeßrechner 26 oder durch den Motorrechner 30 erfolgen. Bei Ausfall einer Komponente übernimmt die andere Komponente die entsprechende Funktion. Dadurch ist eine hohe Betriebssicherheit des Systems gewährleistet.

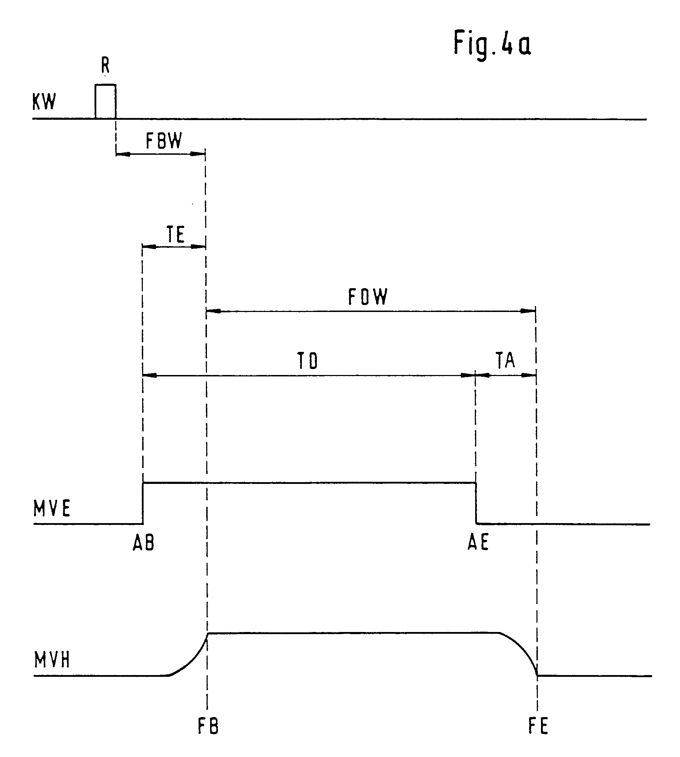

Im folgenden wird die Berechnung des Ansteuerbeginnsignals ASS und des Ansteuerendesignals MV0 erläutert. Erfindungsgemäß ergibt sich eine optimale Ausnutzung des Kraftstoffs bei minimalen Abgasund Geräuschemissionen nur dann, wenn die Kraftstoffeinspritzung bei der richtigen Stellung der Kurbelwelle erfolgt, und gleichzeitig die Mengenzumessung von der Stellung der Nockenwelle bzw. der momentanen Drehzahl der Nockenwelle abhängt. Dies wird durch die anhand der Figur 4a verdeutlichten Vorgehensweise erreicht.

Der Ansteuerbeginn AB definiert durch den Beginn des Ansteuerbeginnsignal ASS, muß ausgehend von dem Förderbeginnwinkel FBW und der Einschaltzeit des Magnetventils TE bestimmt werden. Der Förderbeginnwinkel FBW wird abhängig von verschiedenen Betriebsparametern üblicherweise aus einem Kennfeld ausgelesen. Er gibt die Winkellage des gewünschten Förderbeginns in Bezug auf einen Referenzimpuls R an. Der Impulsgeber zur Abgabe des Referenzimpulses R ist vorzugsweise auf der Kurbelwelle angeordnet, da der Einspritzbeginn abhängig von der Kurbelwellenstellung erfolgen muß. Zwischen dem Ansteuerbeginn AB und dem tatsächlichen Förderbeginn FB besteht eine gewisse zeitliche Verschiebung. Diese Zeitdifferenz wird üblicherweise als Einschaltzeit TE bezeichnet.

Entsprechendes gilt auch für eine Ausschaltzeit TA, die die Differenz zwischen Ansteuerende AE und Förderende FE angibt. Aus dem Pumpenkennfeld muß abhängig von dem Mengenwunsch QK und dem Förderbeginnwinkel FBW bzw. dem Förderbeginn FB und der Drehzahl der Förderdauerwinkel FDW berechnet werden. Ausgehend von dem Förderdauerwinkel FDW muß mit Hilfe der Nockenwellendrehzahl das Ansteuerende AE unter Berücksichtigung der Ausschaltzeit TA des Magnetventils bestimmt werden. Somit berechnet sich der Ansteuerbeginn ausgehend von den auf der Kurbelwelle angebrachten Markierungen und das Ansteuerende aufgrund der auf der Nockenwelle angebrachten Markierungen.

In Figur 4a ist das Auftreten eines Referenzimpulses R aufgeigt. Dieser Referenzimpuls R wird von einem Impulsrad auf der Kurbelwelle erzeugt. Zusätzlich ist das Ansteuersignal MVE zur Ansteuerung des Magentventils eingezeichnet. Dabei sind jeweils Ansteuerbeginn AB und das Ansteuerende AE aufgetragen. In der letzten Zeile ist der tatsächliche Magnetventilhub MVH mit dem Förderbeginn FB und dem tatsächlichen Förderende FE eingetragen. Der Abstand zwischen Ansteuerbeginn und Ansteuerende wird als Dauer des Ansteuerimpulses TD bezeichnet. Die Differenz zwischen Ansteuerende und tatsächlichem Förderende wird als Ausschaltzeit TA bezeichnet. Ferner ist die Einschaltzeit TE, die Differenz zwischen Ansteuerbeginn und tatsächlichem Förderbeginn aufgetragen. Ebenfalls sind der Förderdauerwinkel und der Förderbeginnwinkel FBW eingezeichnet.

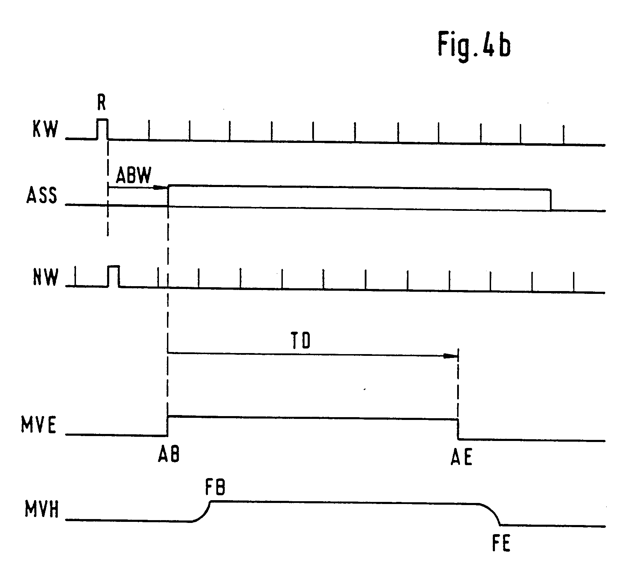

In Figur 4b ist eine besonders vorteilhafte Ausführungsform des erfindungsgemäßen Systems dargestellt. In der Figur 4b ist als erstes die Impulsfolge eines auf der Kurbelwelle angeordneten Impulsrades aufgezeigt. Dieser Impulsrad enthält wenigstens eine Markierung, die einen Referenzimpuls R erzeugt. Ausgehend von diesem Referenzimpuls wird der Förderbeginn festgelegt. Der zugehörige Ansteuerbeginnwinkel ABW ist ebenfalls eingezeichnet. Ferner ist die Impulsfolge eines auf der Nockenwelle NW angeordneten Impulsrades eingezeichnet. Auch ist die Dauer TD des Ansteuerimpulses markiert. Als weiteres Signal ist das Ansteuersignal MVE für das Magnetventil eingetragen. Zwischen Ansteuerbeginn AB und Ansteuerende AE, das der Dauer des Ansteuerimpulses TD entspricht, nimmt das Signal einen höheren Wert an. In der letzten Zeile ist der Magnetventilhub MV-Hub auftragen. Das Magnetventil nimmt zwischen dem Förderbeginn FB und dem Förderende eine solche Position ein, in der die Kraftstoffpumpe fördert. Es wäre auch denkbar, daß die Vorzeichen der Signale gerade umgekehrt sind.

Im Motorrechner werden die Kraftstoffmenge QK und der Fördrbeginnwinkel ABW relativ zum Referenzimpuls R der Kurbelwelle berechnet. Dabei berücksichtigt er die Einschaltzeit TE des Magnetventils. Die Menge wird über den CAN Bus an den Zumeßrechner übermittelt. Der Motorrechner berechnet abhängig von den auf der Kurbelwelle angebrachten Markierungen das Ansteuerbeginnsignal ASS. Die Einschaltzeit TE wird über den CAN Bus vom Zumeßrechner dem Motorrechner zugeleitet. Zum errechneten Ansteuerbeginn AB gibt der Motorrechner über eine separate Leitung das Ansteuerbeginnsignal ASS an die Zumeßsteuerung. Die Zumeßsteuerung veranlaßt die Ansteuerung des Magnetventils zum vorgegebenen Zeitpunkt.

Mit Auftreten des Ansteuerbeginnsignals ASS startet die Berechnung des Ansteuerendesignals MV0. Ausgehend von verschiedenen Betriebsparametern wird der Förderdauerwinkel FDW bzw. die Dauer des Ansteuerimpulses TD aus einem Pumpenkennfeld ausgelesen. Anschließend wird anhand der von den auf der Nockenwelle angebrachten Markierungen abgebenen Impulsen das genaue Ende des Ansteuerendesignals MV0 berechnet. Die Bestimmung des Ansteuerendesignals MV0 kann erst nach vorliegen des Ansteuerbeginnsignals erfolgen, da der Förderbeginn in die Berechnung der Ansteuerdauer eingeht. Während der Zumessung wird also sowohl die Berechnung der Förderdauer ausgehend von dem Pumpenkennfeld durchgeführt, als auch die Berechnung des genauen Zeitpunktes des Ansteuerendesignals MV0. Die Berechnung des genauen Zeitpunktes des Ansteuerendes erfolgt mit einem sogenannten Nockenwellen-IWZ.

Diese Vorgehensweise bietet den Vorteil, daß der Ansteuerbeginn abhängig von der Kurbelwellenumdrehung und das Ansteuerende abhängig von der Nockenwellenumdrehung festgelegt wird. Dadurch ergibt sich eine sehr genaue Steuerung des Einspritzbeginns zum optimalen Zeitpunkt. Ferner ist durch die Berücksichtigung des Förderbeginns bei der Berechnung der Förderdauer eine hohe Genauigkeit bei der zugemessenen Kraftstoffmenge gegeben.

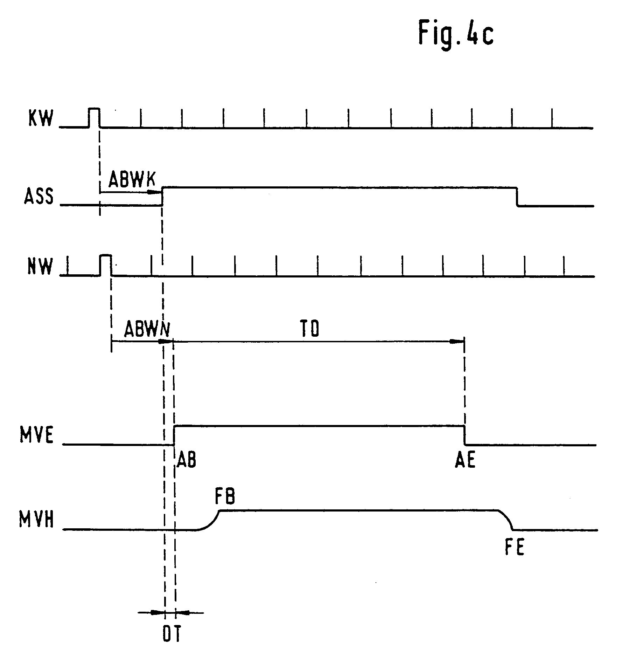

Eine weitere Möglichkeit zur Berechnung der Ansteuerbeginn-/Ansteuerendeimpulse ist in Figur 4c aufgezeigt. Es sind wiederum die Impulsfolgen der Markierungen auf der Kurbel- und der Nockenwelle aufgezeigt. Zusätzlich ist das Ansteuersignal MVE und der Magnetventilhub MVH mit Förderbeginn FB und Förderende FE eingezeichnet. Ferner ist Ansteuerbeginnwinkel ABWN, der von der Stellung der Nockenwelle abhängt und der Ansteuerbeginnwinkel ABWK, der von der Stellung der Kurbelwelle abhängt eingezeichnet.

Im Motorrechner werden das die einzuspritzende Kraftstoffmenge QK und das den Förderbeginn angebende Signal berechnet und beides über CAN Bus an den Zumeßrechner übertragen. Im Zumeßrechner wird der Ansteuerbeginn AB und das Ansteuerende AE mittels eines Nockenwellen-IWZ's berechnet und das Magnetventil entsprechend angesteuert.

Abhängig von den vom Impulsrad auf der Nockenwelle abgegebenen Impulsen werden die genauen Zeitpunkte berechnet. Der Ansteuerbeginn AB hängt dabei vom Ansteuerbeginnwinkel ABWN ab, der vom Zumeßrechner ausgehend von der Stellung der Nockenwelle berechnet wird. Der Ansteurbeginn hängt also nicht direkt von der Stellung der Kurbelwelle ab. Es ergibt sich eine kleine Abweichung DT zwischen dem optimalen kurbelwellenabhängigen Ansteuerbeginn ABWK und dem Ansteuerbeginnwinkel ABWN, der vom Zumeßrechner berechnet wurde. Diese Abweichung resultiert aus der Verschiebung der Kurbelwelle zur Nockenwelle.

Um diese Differenz DT auszugleichen, wird im Motorrechner ein Kurbelwellen-IWZ durchgeführt. Ausgehend von diesem Kurbelwellen-IWZ wird das Ansteuerbeginnsignal ASS generiert und über eine separate Leitung an den Zumeßrechner geleitet.

Durch den Vergleich des Ansteuerbeginnsignals ASS des Motorrechners mit dem Ansteuerbeginnwinkel ABWN des Zumeßrechners kann der geringe Fehler des Förderbeginns bei der nächsten Einspritzung mittels eines Reglers korrigiert werden. Dies bedeutet, daß der Ansteuerbeginn AB der Kurbelwellenfrequenz nachgeführt wird, bis die Zeitdifferenz DT gleich Null wird.

Der Vorteil dieser Möglichkeit liegt darin, daß die Berechnung der Dauer des Ansteuersignals vor dem Start des Nockenwelleninkrementalwinkelzeitsystems durchgeführt werden kann. Dadurch wird ermöglicht, daß immer die optimale Menge einstellbar ist.

## Patentansprüche

1. System zur Steuerung einer Brennkraftmaschine insbesondere einer Dieselbrennkraftmaschine, wobei über wenigstens ein Magnetventil (10) Förderbeginn und Förderende einer Kraftstoffpumpe festgelegt werden,
- eine erste und eine zweite Steuereinheit (20, 30) abhängig von auf einer Nocken- und/oder einer Kurbelwelle angebrachten Markierungen ein Ansteuersignal (MVE) für das Magnetventil bestimmen,
- die erste Steuereinheit (30) über ein erstes Übertragungsmittel ein erstes Signal (QK) an die zweite Steuereinheit (20) abgibt,
- die erste Steuereinheit (30) über ein zweites Übertragungsmittel ein zweites Signal (ASS) abgibt, das im wesentlichen den Förderbeginn bestimmt,
- die zweite Steuereinheit (20) ausgehend von dem ersten Signal (QK) ein drittes Signal (MV0) erzeugt, das im wesentlichen das Förderende bestimmt,
- die erste und zweite Steuereinheit separate Rechner sind, die über voneinander getrennte erste und zweite Übertragungsmittel das erste und zweite Signal austauschen,
- das zweite und das dritte Signal (ASS, MV0) gemeinsam Ansteuersignale (MVE) für das Magnetventil (10) festlegen,
- bei Ausfall des zweiten Signals (ASS) das dritte Signal (MVO) auch zur Festlegung des Förderbeginns verwendet wird, und
- bei Ausfall der ersten Steuereinheit (30) oder des ersten Übertragungsmittels die zweite Steuereinheit (20) ausgehend von einem ihm zugeführten Fahrpedalsignal das dritte Signal (MVO) vorgibt.

2. System nach Anspruch 1, dadurch gekennzeichnet, daß der Beginn des zweiten Signals (ASS) den Förderbeginn abhängig von den Markierungen auf der Kurbelwelle festlegt und daß das Ende des dritten Signals (MV0) das Förderende abhängig von den Markierungen auf der Nockenwelle festlegt.

3. System nach Anspruch 1, dadurch gekennzeichnet, daß zweite und das dritte Signal zur Festlegung des Ansteuersignals (MVE) mit einer Logikschaltung verknüpft werden.

4. System nach einem der vorangehenden Ansprüche, dadurch gekennzeichnet, daß bei der Berechnung des dritten Signals (MV0) das zweite Signal (ASS) berücksichtigt wird.

5. System nach einem der vorangehenden Ansprüche, dadurch gekennzeichnet, daß eine Überwachungseinrichtung vorgesehen ist, die die Funktionsfähigkeit der zweiten Steuereinheit (20) überprüft, und daß bei einem Defekt der zweiten Steuereinheit (20) das zweite Signal (ASS) den Förderbeginn und das Förderende abhängig von den Markierungen auf der Kurbelwelle festlegt.

6. System nach einem Anspruch 5, dadurch gekennzeichnet, daß bei einem Defekt der zweiten Steuereinheit die Überwachungseinrichtung ein solches Signal an das Logikschaltung abgibt, daß das zweite Signal (ASS) durchgreift.

7. System nach einem der vorangehenden Ansprüche, dadurch gekennzeichnet, daß bei Ausfall des zweiten Signals (ASS) das dritte Signal (MVO) den Förderbeginn und das Förderende abhängig von den Markierungen auf der Nockenwelle festlegt.

8. System nach einem der vorangehenden Ansprüche, dadurch gekennzeichnet, daß bei Ausfall des zweiten Signals (ASS) oder bei Defekt der ersten Steuereinheit die zweite Steuereinheit ein solches Signal an die Logikschaltung abgibt, daß das dritte Signal (MVO) eines Zumeßrechners (26) durchgreift.

9. System nach einem der vorangehenden Ansprüche, dadurch gekennzeichnet, daß die erste Steuereinheit das Zweite Signal (ASS) ausgehend von den Markierungen auf der Kurbelwelle bestimmt, und die zweite Steuereinheit das dritte Signal (MVO) ausgehend von den Markierungen auf der Nockenwelle bestimmt.

10. System nach einem der vorangehenden Ansprüche, dadurch gekennzeichnet, daß die zweite Steuereinheit den Ansteuerbeginn und das Ansteuerende ausgehend von den Markierungen auf der Nockenwellen bestimmt wobei das zweite Signal der ersten Steuereinheit als Vergleichssignal dient.

## Claims

1. System for controlling an internal combustion engine, in particular a diesel internal combustion engine, in which the beginning of delivery and the end of delivery of a fuel pump are fixed by means of at least one magnetic valve (10),
- a first and a second control unit (20, 30) determine an activation signal (MVE) for the magnetic valve as a function of markings applied to a camshaft and/or a crankshaft,
- the first control unit (30) emits a first signal (QK) to the second control unit (20) via a first transmission means,
- the first control unit (30) emits a second signal (ASS), which essentially determines the beginning of delivery, via a second transmission means,
- the second control unit (20) generates a third signal (MVO), which essentially determines the end of delivery, on the basis of the first signal (QK),
- the first and second control units are separate computers which exchange the first and second signals via mutually separated first and second transmission means,
- the second and the third signal (ASS, MVO) jointly fix activation signals (MVE) for the magnetic valve (10),
- on failure of the second signal (ASS), the third signal (MVO) is also used for fixing the beginning of delivery, and
- on failure of the first control unit (30) or the first transmission means, the second control unit (20) provides the third signal (MVO) on the basis of an accelerator pedal signal supplied to it.

2. System according to Claim 1, characterized in that the beginning of the second signal (ASS) fixes the beginning of delivery as a function of the markings on the crankshaft and that the end of the third signal (MVO) fixes the end of delivery as a function of the markings on the camshaft.

3. System according to Claim 1, characterized in that the second and the third signal for fixing the activation signal (MVE) are associated with a logic circuit.

4. System according to one of the preceding claims, characterized in that the second signal (ASS) is taken into account in the calculation of the third signal (MVO).

5. System according to one of the preceding claims, characterized in that a monitoring device is provided which checks the functional capability of the second control unit (20), and in that, in the case of a defect in the second control unit (20), the second signal (ASS) fixes the beginning of delivery and the end of delivery as a function of the markings on the crankshaft.

6. System according to Claim 5, characterized in that in the case of a defect in the second control unit, the monitoring device emits such a signal to the logic circuit that the second signal (ASS) passes through.

7. System according to one of the preceding claims, characterized in that in the case of a failure of the second signal (ASS), the third signal (MVO) fixes the beginning of delivery and the end of delivery as a function of the markings on the camshaft.

8. System according to one of the preceding claims, characterized in that in the case of a failure in the second signal (ASS) or in the case of a defect in the first control unit, the second control unit emits such a signal to the logic circuit that the third signal (MVO) of a metering computer (26) passes through.

9. System according to one of the preceding claims, characterized in that the first control unit determines the second signal (ASS) on the basis of the markings on the crankshaft and the second control unit determines the third signal (MVO) on the basis of the markings on the camshaft.

10. System according to one of the preceding claims, characterized in that the second control unit determines the beginning of activation and the end of activation on the basis of the markings on the camshaft, the second signal of the first control unit acting as a reference signal.

## Revendications

1. Système pour commander un moteur à combustion interne, notamment un moteur Diesel, système dans lequel le début du refoulement et la fin du refoulement d'une pompe de carburant sont déterminés par l'intermédiaire d'au moins une vanne magnétique (10),
- une première et une seconde unité de commande (20, 30) détermine un signal de commande (MVE) pour la vanne magnétique en fonction de repères rapportés sur un arbre à cames et/ou un vilebrequin,
- la première unité de commande (30) délivre, par l'intermédiaire d'un premier moyen de transmission, un premier signal (QK) à la seconde unité de commande (20),
- la première unité de commande délivre (30) délivre par l'intermédiaire d'un second moyen de transmission, un second signal (ASS) qui détermine pour l'essentiel le début du refoulement,
- la seconde unité de commande (20) émet, en partant du premier signal (QK), un troisième signal (MVO) qui détermine pour l'essentiel la fin du refoulement,
- la première et la seconde unité de commande sont des ordinateurs distincts, qui par l'intermédiaire du premier et du second moyen de transmission distinct l'un de l'autre échange le premier et le second signal,
- le second et le troisième signal (ASS, MVO) déterminent des signaux de commande communs (MVE) pour la vanne magnétique (10),
- en cas de défaillance du second signal (ASS), le troisième signal (MVO) est également utilisé pour la détermination du début du refoulement,
- en cas de défaillance de la première unité de commande (30) ou bien du premier moyen de transmission, la seconde unité de commande (20) prédéfinit le troisième signal (MVO) en partant d'un signal de la pédale d'accélérateur qui lui est appliquée.

2. Système selon la revendication 1, caractérisé en ce que le début du second signal (ASS) détermine le début du refoulement en fonction des repères sur le vilebrequin, et en ce que la fin du troisième signal (MVO) détermine la fin du refoulement en fonction des repères sur l'arbre à cames.

3. Système selon la revendication 1, caractérisé en ce que le second et le troisième signal sont combinés par un circuit logique pour la détermination du signal de commande (MVE).

4. Système selon une des précédentes revendications, caractérisé en ce que lors du calcul du troisième signal (MVO), il est tenu compte du second signal (ASS).

5. Système selon l'une des revendications,1 à 4 caractérisé en ce qu'il est prévu un dispositif de surveillance, qui vérifie l'aptitude au fonctionnement de la seconde unité de commande (20), et en ce que dans le cas d'un défaut de la seconde unité de commande (20), le second signal (ASS) détermine le début du refoulement et la fin du refoulement en fonction des repères sur le vilebrequin.

6. Système selon la revendication 5, caractérisé en ce que dans le cas d'un défaut de la seconde unité de commande, le dispositif de surveillance délivre au circuit logique un signal tel que le second signal (ASS) devient efficace.

7. Système selon l'une des revendications 1 à 6, caractérisé en ce qu'en cas de défaillance du second signal (ASS), le troisième signal (MVO) détermine le début du refoulement et la fin du refoulement en fonction des repères sur l'arbre à cames.

8. Système selon l'une des revendications 1 à 7, caractérisé en ce qu'en cas de défaillance du second signal (ASS), ou bien en cas de défaut de la première unité de commande, la seconde unité de commande délivre au circuit logique un signal tel que le troisième signal (MVO) d'un ordinateur de dosage (26) devient efficace.

9. Système selon l'une revendications 1 à 8, caractérisé en ce que la première unité de commande détermine le second signal (ASS) en partant des repères sur le vilebrequin, tandis que la seconde unité de commande détermine le troisième signal (MVO) en partant des repères sur l'arbre à cames.

10. Système selon l'une des revendications 1 à 9, caractérisé en ce que la seconde unité de commande détermine le début de la commande et la fin de la commande en partant des repères sur l'arbre à cames, tandis que le second signal de la première unité de commande sert de signal de comparaison.
